# EUROPÄISCHE PATENTANMELDUNG

(11) **EP 1 475 413 A1**
(43) Veröffentlichungstag der Anmeldung: **10.11.2004**
(21) Anmeldenummer: 04005725.9
(22) Anmeldetag: 10.03.2004
(51) Int. Cl.: C08L 89/06, C14C 3/32

(54) **Verfahren zur Herstellung eines Werkstoffs unter Verwendung von Lederabfällen und damit erzeugtes Formteil**

(30) Priorität: 06.05.2003 DE 10320061
(71) Anmelder: Bader GmbH & Co. KG, 73033 Göppingen (DE)
(72) Erfinder: Kellert, Hans-Jürgen, 72501 Gammertingen (DE)
(74) Vertreter: Patentanwälte Rüger, Barthelt & Abel

(57) **Zusammenfassung**

Bei einem Verfahren zur Herstellung eines nicht klebrigen, verrottungsfesten Werkstoffes unter Verwendung von Lederabfällen, werden Lederabfälle zu einem Lederfasern enthaltenden Ledermahlgut mit einem vorgegebenen Korngrößenbereich zerkleinert. Dem Ledermahlgut werden kollagenhaltige, natürliche, zerkleinerte Abfallprodukte und erforderlichenfalls die Klebrigkeit und/oder die Verrottung verhindernde Mittel zugemischt. Die so erhaltene Mischung wird unter Druckeinwirkung und bei erhöhter Temperatur zu einer fließfähigen Masse umgeformt, in der die Fasern des Ledermahlgutes durch den unter der Druck- und Temperatureinwirkung aus dem in der Mischung enthaltenen Kollagen entstehenden Klebstoff gebunden sind. Die Masse wird sodann zu einem formbeständigen Werkstoff auf Umgebungstemperatur abgekühlt.

## Beschreibung

Die Erfindung betrifft ein Verfahren zur Herstellung eines nicht klebrigen, verrottungsfesten Werkstoffs unter Verwendung von Lederabfällen und ein aus einem solchen Werkstoff nach diesem Verfahren erzeugtes Formteil.

Bei der Lederherstellung wird die Chromgerbung für Schuhoberleder, Bekleidungsleder und Leder für andere Einsatzzwecke in weitem Umfang verwendet. Es ist bekannt dabei anfallende Abfallprodukte, wie Chromfalzspäne oder Beschneideabfälle des wet blue Materials aufzuarbeiten, um daraus brauchbare Werkstoffe zu gewinnen. Bei einem in der Praxis bekannten verfahren werden anteilig Chromfalzspäne zu bahnförmigen Flächengebilden verarbeitet, die üblicherweise als Lederfaserwerkstoffe bezeichnet werden. Diese Flächengebilde werden nach einer der Papierherstellung entlehnten Technologie erzeugt. Dazu werden in einem aufwendigen Naßmahlprozess die Falzspäne und/oder Beschneideabfälle aufgefasert und mit natürlicher oder künstlicher Latex vermischt. Um einen lederähnlichen Charakter des Bahnmaterials zu erzielen, werden Fettungsmittel, Farbstoffe und andere bei der Lederherstellung eingesetzte Hilfsstoffe zugesetzt.

Nach dem Absetzen der Lederfasern auf einem sich kontinuierlich bewegenden Siebboden und einer sich daran anschließenden Verdichtung des Materials mittels Druckwalzen und Trocknung des entstehenden Flächengebildes wird ein lederähnliches Material erhalten. Ziel dieser Technologie ist es, ein dem ursprünglichen echten Leder nahe kommendes Ersatzprodukt herzustellen und den Werkstoff Leder zu.imitieren.

Das gleiche Ziel wird ausdrücklich auch in der DE 199 19 111 C2 verfolgt, die eine Ledermahlgut enthaltende Zusammensetzung für die Herstellung von Formteilen und Verfahren zur Herstellung der Formteile zur Verwendung als Schuhbestandteile und als Schalldämmungselemente für die Bau- bzw. Fahrzeugindustrie beschreibt. Bei diesem Stand der Technik wird trocken gemahlenes Ledermahlgut, das aus Lederteilen natürlicher Struktur besteht, mit einem mehr oder weniger hohen Anteil thermoplastischer Bindemittel und Weichmacher gemischt und danach in ein Formwerkzeug eingebracht. Nach Aushärtung der Masse durch Maßnahmen, die dem jeweils verwendeten Bindemittel angepasst sind, kann das Formteil aus dem Werkzeug entnommen werden. Um die typischen Ledereigenschaften zu erhalten, werden nur Bindemittel verwendet, die unterhalb 160° C schmelzen, um eine Denaturierung der Lederfasern zu vermeiden. Als solche Bindemittel werden thermoplastische Polymere und/oder gering vernetzte Polymere angegeben, denen auch Abfall-Recyclate in Form von zerkleinerten Abfall-Schäumen, etc. zugefügt werden können.

Die bei diesem Verfahren erforderliche Zugabe von 0,5 bis 20 Gewichtsprozent Weichmacher beschränkt die Verwendung so hergestellter Formteile u.a. im Automobilbereich bei der Karosserieinnenausstattung, weil dort strenge Forderungen bezüglich des VOC-Gehaltes (volatile organic compounds) gestellt werden, die bei Verwendung von Weichmachern generell nicht erfüllt werden können. Wegen des verhältnismäßig hohen Bindemittelanteils von 10 bis 60 Gewichtsprozent können die Lederfasern bei dieser bekannten Zusammensetzung als Füllstoffe für das Bindemittel angesehen werden.

Aufgabe der Erfindung ist es demgegenüber einen verbesserten Weg zur umweltschonenden Entsorgung von Lederabfällen und gleichzeitig zur Erzeugung eines vielfältig einsetzbaren Werkstoffs mit neuartigen Eigenschaften zu schaffen.

Zur Lösung dieser Aufgabe weist das erfindungsgemäße Verfahren zur Herstellung eines nicht klebrigen, verrottungsfesten Werkstoffs unter Verwendung von Lederabfällen die Merkmale des Patentanspruchs 1 auf. Ein nach diesem Verfahren hergestelltes Formteil ist Gegenstand des Patentanspruchs 14.

Bei dem neuen Verfahren werden Lederabfälle zu einem Fasern enthaltenden Ledermahlgut mit einem vorgegebenen Korngrößenbereich zerkleinert. Dem Ledermahlgut werden kollagenhaltige, natürliche, zerkleinerte Abfallprodukte und erforderlichenfalls die Klebrigkeit und/oder die Verrottung verhindernde Mittel zugemischt. Die so erhalte Mischung wird unter Druckeinwirkung und bei erhöhter Temperatur zu einer fließfähigen Masse umgeformt, in der die Fasern des Ledermahlguts durch den unter der Druck- und Temperatureinwirkung aus dem in der Mischung enthaltenden Kollagen entstehenden Klebstoff gebunden sind. Anschließend wird die Masse schließlich zu einem formbeständigen Werkstoff auf Umgebungstemperatur abgekühlt.

Die für die Durchführung dieses Verfahrens erforderlichen Lederfasern des Ledermahlguts sind Bestandteil der bei der Herstellung und Verarbeitung von Leder unvermeidlich anfallenden festen Lederabfälle. Auch Lederabfälle, die am Ende der Gebrauchsfähigkeit von Gegenständen aus Leder anfallen, d.h. Lederabfälle, die gebrauchte Lederteile enthalten oder aus solchen bestehen, können verarbeitet werden. Die chemisch-physikalische Zusammensetzung dieser Abfälle ist demgemäß unterschiedlich. Die Abfälle unterscheiden sich im Wesentlichen durch die An- oder Abwesenheit von Gerbstoffen, Farbe und Fettungsmittel und im Falle gebrauchter Lederprodukte durch mehr oder weniger hohe Anteile von in der Regel polymeren Fremdstoffen.

Bei dem erfindungsgemäßen Verfahren werden die Abfälle aus Fertigleder (gebraucht oder ungebraucht) zunächst mechanisch zerkleinert, um die für den neuen Werkstoff erforderlichen Lederfasern zu gewinnen. Der jeweilige Zerkleinerungsgrad, d.h. die Korngröße des Mahlguts, ist von den angestrebten physikalischen und ästhetischen Eigenschatten des erzeugten Werkstoffs bzw. Formteils abhängig und kann innerhalb bestimmter Grenzen zweckentsprechend gewählt werden. Die Zerkleinerung der Lederabfälle erfolgt mittels bekannter Schneidmühlen und ist Stand der Technik. Falls erforderlich können die Lederabfälle vor oder nach dem Zerkleinern einer Vorbehandlung unterworfen werden, um einen unerwünscht hohen Anteil von Fremdstoffen, bspw. Fettungsmitteln oder Polymeren auf einen brauchbaren Wert zu reduzieren.

Das erfindungsgemäße Verfahren verzichtet völlig auf die üblicherweise als Bindemittel verwendeten thermoplastischen Polymere, sondern benutzt kollagenhaltige, natürliche, zerkleinerte Abfallprodukte, die unter den erfindungsgemäßen Verfahrensparametern das erforderliche Bindemittel für die Lederfasern liefern. Unter den Verfahrensparametern des neuen Verfahrens verhält sich die Mischung aus Lederfasern und von aus den kollagenhaltigen, zerkleinerten Abfallprodukten stammendem Kollagen wie eine thermoplastisch verformbare Masse, die zu platten-, bahn-, stangen- oder rohrförmigem Halbzeug verarbeitet oder durch Einpressen in ein entsprechendes Formwerkzeug, ähnlich wie bei den in der Plastverarbeitung üblicherweise angewandten Verfahren, z. B. Spritz-Gießverfahren, zu einem dreidimensionalen Formteil geformt werden kann.

Der mit dem neuen Verfahren erzeugte Werkstoff weist ganz neuartige Eigenschaften auf. Er kann unbehandelt verarbeitet oder auch spanabhebend (durch Fräsen, Hobeln, Drehen, Schleifen, etc.) bearbeitet werden und durch entsprechende Wahl der Verfahrensparameter auch geringfügig so modifiziert werden, dass er flexible Eigenschaften aufweist. Der neue Werkstoff besteht nahezu ausschließlich aus Kollagen und enthält keine synthetischen Bindemittel und/oder Weichmacher. Er hat bei allen erfindungsgemäßen Anwendungsfällen hervorragende Festigkeitseigenschaften, ist schalldämmend und hat ein niedriges spezifisches Gewicht. Durch Einbringen entsprechender Zusatzstoffe, wie Farbpigmente, Textilien, natürliche oder künstliche Fasermaterialien, Hydrophobierungsmittel und dergleichen, können dem neuen Werkstoff jeweils angestrebte ästhetische oder mechanische Eigenschaften verliehen werden. Lediglich zur Regulierung der physikalischen Eigenschaften, wie z.B. Härte, Wasserfestigkeit, Oberflächenbeschaffenheit, etc. können auch erforderlichenfalls Polymere in wässriger Lösung, Emulsionen, Dispersionen oder Suspensionen in einem Anteil von 0 bis 10 Gew.% zugegeben werden. Die Oberfläche von aus diesem Werkstoff hergestellten Teilen kann geprägt, lackiert oder mit anderen Überzügen versehen werden. Wegen dieser in weiten Grenzen einstellbaren Eigenschaften ist der neue Werkstoff besonders interessant für den Einsatz für Zwecke der Karosserieinnenausstattung im Kraftfahrzeugbau, aber auch in anderen Anwendungsbereichen, wie im technischen Gerätebau, der Möbelindustrie, im Baustoffsektor und in anderen Bereichen. Dabei können der Werkstoff oder aus diesem hergestellte Formteile erforderlichenfalls Verstärkungsmaterialien, bspw. Glas- oder Kohlefasern, auch in Form von textilen Flächengebilden, Fäden, Garnen, Strängen, etc. enthalten oder auf solchen angeordnet bspw. auf diese aufkaschiert sein.

Bei dem neuen Verfahren werden die dem Ledermahlgut zugemischten kollagenhaltigen Abfallprodukte zum Zeitpunkt der Formgebung unter erhöhtem Druck, durch Einwirkung von Wärme und Feuchtigkeit partiell in Gelatine umgewandelt, die dann als Klebstoff ihre adhäsive Wirkung entfalten kann. Als kollagenhaltige Abfallprodukte können ungegerbte Produkte in Form von Blößen- und Hautspalten u.ä. verwendet werden. Auch der unmittelbare Einsatz von Gelatine oder Haut- oder Knochenleim als Klebstoff ist denkbar. In diesen Fällen müssen in der Regel allerdings Vorkehrungen getroffen werden, um zu verhindern, dass der Klebstoff nicht durch,Feuchteaufnahme aus der Luft erneut klebrig wird oder unter der Einwirkung von Mikroorganismen, ggfs. unter starker Geruchsbildung, verrottet. Es werden deshalb in diesem Falle in der Regel die Klebrigkeit und/oder die Verrottung verhindernde Vernetzungssmittel zugemischt, indem bspw. eine Vernetzung mit vernetzend wirkenden Chemikalien herbeigeführt wird. Als geeignete Vernetzungsmittel kommen bspw. Isocyanate in Frage.

Eine wesentliche Vereinfachung des Verfahrens lässt sich aber in der Weise erzielen, dass als kollagenhaltige Abfallprodukte zumindest teilweise entgerbte, chromgegerbte Lederabfälle, wie Chromfalzspäne oder chromgegerbte Beschneideabfälle von wet blue Material u.ä. verwendet werden. Der gerbende Charakter des Restchromgehaltes dieser Abfallprodukte der Chromgerberei reicht aus, um den Werkstoff verrottungsfest zu machen. Die Chromfalzspäne und/oder Beschneideprodukte liefern dabei den Klebstoff für die aus den zerkleinerten Lederprodukten stammenden Lederfasern. Aus chemischer Sicht ist dieser Klebstoff Kollagen, der jedoch, bedingt durch die vorausgehende Gerbung, in den Falzspänen und den Beschneideabfällen zunächst nur latent zur Verfügung steht.

Die Chromfalzspäne und oder die grob zerkleinerten chromgegerbten Beschneideabfälle werden mit Hilfe an sich bekannter Entgerbungsverfahren entgerbt, wodurch der Chromoxidgehalt der Falzspäne und Beschneideabfälle reduziert wird. Bei der Entgerbung ist darauf zu achten, dass die entgerbten Fasern nicht hydrolysiert werden, deshalb sind z.B. Entchromungsverfahren auf enzymatischer Basis ungeeignet.

Gut geeignet sind oxydative Entgerbungsverfahren, wobei sichergestellt werden muss, dass nach der erfolgten Teilentgerbung eine ausreichende reduktive Behandlung durchgeführt wird. U. a. kann die Entgerbung z.B. mit Wasserstoffperoxid in alkalischer Lösung stattfinden.

Die nach einem solchen oder ähnlichen Verfahren noch schwach gegerbten Falzspäne oder Beschneideabfälle werden mehrfach gewaschen und anschließend bei milder Hitze (30° bis 40°C) getrocknet. Je nach angewandtem Entgerbungs(Entchromungs-)Verfahren kann das freigesetzte Chrom abgetrennt und wiederverwendet werden oder es wird nach den üblichen Verfahren in der Lederindustrie als Chromschlamm entsorgt.

Die so vorbehandelten Chromfalzspäne oder Beschneideabfälle werden unter erhöhtem Druck unter Wärme- und Feuchtigkeitseinwirkung partiell in Gelatine umgewandelt, die als Klebstoff wirkt. Bei dem neuen Verfahren werden die Lederfasern (deren kleinste Teilchen, Fibrillen und Kollagenhelices darstellen), durch den Klebstoff (Gelatine) im physikalischen Sinne zusammengeklebt, der bei Verwendung von teilentgerbten Chromfalzspänen und/oder chromgegerbten Beschneideabfällen unter der Druck- und Temperatureinwirkung in situ entsteht. Während die Temperatureinwirkung ein Aufschmelzen der entgerbten Kollagenfibrillen und damit die Freisetzung des Klebstoffs bewirkt, muss über den zur Einwirkung kommenden Druck erreicht werden, dass sich die einzelnen Fasern des Fasermaterials so weit gegenseitig annähern, dass eine ausreichende Adhäsion zwischen den Lederfasern und dem nicht faserförmigen Kollagen entsteht. Eine solche ausreichende Annäherung wird auch durch die kurzzeitige Verflüssigung des Fasergemisches unterstützt.

Im Ergebnis wird bei der neuen Verfahrensweise, wie bereits erwähnt, ein Werkstoff erzeugt, der außer den zur Lederherstellung verwendeten, gegerbten Lederabfällen und Abfallprodukten erforderlichen Chemikalien, die in diesen Abfällen und Abfallprodukten enthalten sind oder nach einer Vorbehandlung zurückbleiben, keine neuen Zusätze oder Chemikalien erfordert. Die Vielfältigkeit der Eigenschaften des nach dem erfindungsgemäßen Verfahren hergestellten Werkstoffs kann insbesondere über die verwendete Korngröße des Ledermahlguts gesteuert werden. Durch Zugabe geringer Mengen Zusatzstoffe ist eine weitere Beeinflussung der Eigenschaften möglich, worauf bereits hingewiesen wurde.

Im Nachfolgenden werden das neue Verfahren und eine Auswahl typischer Einsatzfelder für den neuen Werkstoff und daraus hergestellte Formteile anhand einiger Ausführungsbeispiele erläutert:

### Ausführungsbeispiel 1:

Es wird ein Formteil in Gestalt einer üblicherweise aus Textilmaterialien bestehenden, wenig flexiblen Hutablage für die Karosserieinnenausstattung in der Automobilindustrie nach dem erfindungsgemäßen Verfahren hergestellt.

Lederabfall wird trocken in einer Schneidmühle mit einem Lochblech der Größe 2 mm gemahlen. Die Lederfasern werden auf eine Feuchte von 6% getrocknet und anschließend mit partiell entgerbten Chromfalzspänen im Verhältnis 1:2 gemischt.

Zur Herstellung der entgerbten Chromfalzspäne werden normal anfallende Chromfalzspäne (Gerbstoffgehalt 4,3%) mit einem 5 mm Sieb gesiebt. Größere Partikel (speziell Abschneidefälle) müssen auf einer Schneidmühle zerkleinert werden.

Zur Entgerbung wird ein oxydatives Verfahren verwendet. Nach 24h Entgerbung werden die teilentgerbten Chromfalzspäne (Chromgehalt 1,4%) abfiltriert, gewaschen und dabei reduktiv behandelt. Das anfallende Prozess- und Waschwasser wird vereinigt, ebenfalls reduktiv behandelt, und nach pH-Wert Einstellung wird der enthaltene Chromgerbstoff durch Ultrafiltration aus der Flotte entfernt und nach Aufbereitung erneut zur Gerbung eingesetzt. Die entgerbten Chromfalzspäne werden bei schwacher Hitze auf einen Feuchtegehalt von 12% getrocknet. Während der Mischung der Faserkomponenten aus den zerkleinerten Lederabfall und aus den teilentgerbten Chromfalzspänen werden schwarze Farbpigmente (0,1% auf Tausend (TS)) zugesetzt. Die so entstandene Fasermischung ist rieselfähig und agglomeriert nicht, so dass ein entsprechendes Formwerkzeug unproblematisch gefüllt werden kann. Die Füllung wird so bemessen, dass nach dem Schließen des Werkzeugs ein Druck von ca. 200kN entsteht. Das geschlossene Werkzeug wird innerhalb von 5 Min. auf eine Temperatur von 175°C erwärmt, dann innerhalb von 2 Minuten auf 60-70°C abgekühlt und danach zur Entnahme des Formkörpers geöffnet.

Je nach Konstruktion des Werkzeuges, können Formkörper mit unterschiedlichen Materialendstärken hergestellt werden. Die Dickenverteilung des Lederfasergemisches im Werkzeug vor dem Schließvorgang bezüglich der resultierenden Materialenddicke ist unproblematisch, da während der Temperaturerhöhung im geschlossenen Werkzeug ein quasiflüssiger Zustand entsteht, der Füllhöhenunterschiede auszugleichen vermag.

### Ausführungsbeispiel 2:

Es wird ein Formteil in Gestalt einer B-Säulenverkleidung für die Karosserieinnenausstattung in der Autombilindustrie nach dem erfindungsgemäßen Verfahren hergestellt.

Das Verfahren entspricht im Wesentlichen jenem nach dem Ausführungsbeispiel 1. Um die Elastizität des Formteils zu erhöhen, wird Ledermahlgut mit einer Korngröße von 5 - 15 mm eingesetzt. Dies erfordert einen erhöhten Anteil an Kollagen. Das Mischungsverhältnis Lederfasern aus Lederabfall: entgerbten Chromfalzspänen beträgt 1:6. Außerdem wird bei der Entgerbung ein Chromgehalt von 0,8% eingestellt.

Das Formwerkzeug wird, wie in Ausführungsbeispiel 1 beschrieben, gefüllt und mit einer Schließkraft von 150 kN geschlossen. Es wird auf 130°C erhitzt, 15 Min. bei dieser Temperatur belassen, innerhalb von 3 Min. auf ca. 40°C abgekühlt und danach geöffnet.

Die so hergestellte Säulenverkleidung ist entsprechend der Spezifikation des Automobilherstellers ausreichend flexibel und ausreichend mechanisch belastbar. Die erzielte Flexibilität resultiert in diesem Falle aus der höheren Beweglichkeit der zusammenhängenden größeren Lederpartikel.

Gleichzeitig wird ein interessantes ästhetisches Aussehen des Bauteils erreicht. In einer besonderen Ausführungsform kann das Formteil durch Sprühapplikation lackiert werden (ähnlich einer Lederzurichtung) oder es kann durch Verwendung eines Werkzeugdeckels mit einer Narbenimitation ein künstlicher Narben (ähnlich einem Ledernarben) erzeugt werden.

### Ausführungsbeispiel 3:

Es wird ein Dämpfungselement für den Maschinenbau nach dem erfindungsgemäßen Verfahren hergestellt.

Die Vorgehensweise entspricht im Wesentlichen jener nach Ausführungsbeispiel 1. Es werden Lederfasern mit einem Mahlgrad (Korngröße) von 0,5 mm verwendet. Die Chromfalzspäne weisen einen Chromgehalt von 1,2% auf. Das Mischungsverhältnis beträgt 1:3 (Lederfasern:Falzspänen). Da das Teil eine sehr komplizierte Form aufweist, wird ein Formteil hergestellt, das nachträglich spanabhebend bearbeitet wird. Bei diesem Mischungsverhältnis, der erforderlichen Schließkraft von 400 kN und der Temperatur von 210°C ist ein Volumenschrumpf von 2,5 bis 4% zu beachten.

Nach Öffnen der Form wird das Drehteil im Trockenofen nochmals 4 Stunden bei 210°C getempert, anschließend abgekühlt und kann dann auf normalen Drehbänken spanabhebend in die erforderliche Endform gebracht werden.

### Ausführunqsbeispiel 4:

Es wird ein vorwiegend ebenes Bauteil für die Möbelindustrie oder als Halbzeug nach dem erfindungsgemäßen Verfahren hergestellt.

Die Verfahrensweise entspricht im Wesentlichen jener nach Ausführungsbeispiel 1, wobei aber Lederfasern mit einer Korngröße von 3-5 mm und unterschiedlichen, ausgewählten Lederfarben verwendet werden. Da es sich um ein weitgehend ebenes Element z.B. ein Verkleidungselement handelt, kann es problemlos mit geeigneter Schleiftechnik geschliffen oder gestrahlt werden und erhält auf diese Weise einen sehr angenehmen nubukähnlichen Griff.

Gleichzeitig wird der neuartige, ästhetische Gesamteindruck des Werkstoffes deutlich sichtbar. Je nach Mischungsverhältnis und Farbwahl der aus unterschiedlich zugerichteten Ledern erzeugten Lederfasern (z.B. Stanzabfälle, die bei der Lederverarbeitung anfallen), entsteht ein neuer ästhetischer Effekt (gesprenkelt bis meliert), den herzustellen bisher nicht möglich war.

### Ausführungsbeispiel 5:

Das erfindungsgemäße Verfahren erlaubt in einer besonderen Ausführungsform auch die Herstellung von zwei oder mehrfarbigen Formteilen oder -Elementen.

Zur Herstellung solcher Formteile wird ein entsprechend vorbereitetes Formwerkzeug mit unterschiedlich eingefärbten Lederfasern oder pigmentierten Lederfasern (ggfs. unter Einhaltung geometrisch exakter Formen oder schichtweise etc.) mit entsprechendem Anteil zugemischter, zerkleinerter, teilweise entgerbter Chromfalzspäne oder Beschneideabfälle gefüllt. Die übrige Verfahrensweise entspricht jener nach dem Ausführungsbeispiel 1 oder 3.

### Ausführungsbeispiel 6:

Das erfindungsgemäße Verfahren erlaubt auch die Kombination der Herstellung eines Formteils (z.B. nach Ausführungsbeispiel 3) mit gleichzeitiger Kaschierung eines Teiles oder des ganzen Formteiles mit flächigen anderen Werkstoffen, wie z.B. grobes Textilgewebe, Kork, Pflanzenfasern, Rinde, usw.). Das Kaschierungsmaterial wird in die entsprechende Form eingelegt, sodann wird die entsprechend vorbereitete Mischung aus Lederfasern und zerkleinerten kollagenhaltigen Abfallprodukten aufgegeben und das Ganze wird gemäß dem Verfahren nach Ausführungsbeispiel 1 weiter verarbeitet.

### Ausführungsbeispiel 7:

Zur Herstellung einer Sitzschale nach dem erfindungsgemäßen Verfahren wird ein entsprechendes Formwerkzeug wie in Ausführungsbeispiel 1 beschrieben, zunächst mit einer Schicht Lederfasermischung (Lederfaser:Chromfalzspänen/1:3) bestreut und anschließend mit einem Armierungsgewebe aus Textil (vorzugsweise Leinwandbindung) abgedeckt. Eine weitere Schicht aus Lederfasermischung (Lederfaser : Chromfalzspänen/1:2) beendet den Schichtenaufbau. Das Formwerkzeug wird mit einer Schließkraft von 200 kN belastet und 15 Min. auf 200° C erhitzt. Innerhalb von 10 Min. wird das Werkzeug sodann so weit abgekühlt, dass es geöffnet werden kann. Die so erhaltene Sitzschale kann freitragend auf dem Gestühl oder dergleichen befestigt werden.

## Patentansprüche

1. Verfahren zur Herstellung eines nichtklebrigen, verrottungsfesten Werkstoffs unter Verwendung von Lederabfällen, bei dem
- Lederabfälle zu einem Lederfasern enthaltenden Ledermahlgut mit einem vorgegebenen Korngrößenbereich zerkleinert wird,
- dem Ledermahlgut kollagenhaltige, natürliche zerkleinerte Abfallprodukte und erforderlichenfalls die Klebrigkeit und/oder die Verrottung verhindernde Mittel zugemischt werden,
- die so erhaltene Mischung unter Druckeinwirkung und bei erhöhter Temperatur zu einer fließfähigen Masse umgeformt wird, in der die Fasern des Ledermahlgutes durch den unter der Druck- und Temperatureinwirkung aus dem in der Mischung enthaltenen Kollagen entstehenden Klebstoff gebunden sind und
- die Masse sodann zu einem formbeständigen Werkstoff auf Umgebungstemperatur abgekühlt wird.

2. Verfahren nach Anspruch 1, **dadurch gekennzeichnet, dass** die kollagenhaltigen Abfallprodukte zumindest teilweise entgerbte, chromgegerbte Lederabfälle enthalten.

3. Verfahren nach Anspruch 2, **dadurch gekennzeichnet, dass** das die Klebrigkeit und/oder Verrottung verhindernde Mittel zumindest teilweise durch in den teilweise entgerbten Lederabfällen enthaltenes Chromoxid gebildet ist.

4. Verfahren nach Anspruch 2, **dadurch gekennzeichnet, dass** als kollagenhaltige Abfallprodukte zumindest teilweise entchromte Falzspäne oder chromgegerbte Beschneideabfälle verwendet werden.

5. Verfahren nach Anspruch 4 **dadurch gekennzeichnet, dass** teilweise entchromte Falzspäne oder Beschneideprodukte mit einem Chromoxidgehalt zwischen 3,8 und 0,5%, vorzugsweise zwischen 2,5 und 1,8% verwendet werden.

6. Verfahren nach Anspruch 4 oder 5, **dadurch gekennzeichnet, dass** das Ledermahlgut mit teilweise entchromten Chromfalzspänen oder Beschneideabfällen im Verhältnis 1 : 0.5 bis 1 : 10, vorzugsweise 1 : 2 bis 1 : 6 gemischt, die Mischung auf eine Gesamtfeuchte von 5-25% gebracht wird, diese Mischung in ein Formwerkzeug eingebracht und in diesem bei einer Temperatur von 80 bis 250°C, vorzugsweise bei 130 bis 175°C, unter einem Druck von 50 bis 400 kN, vorzugsweise von 100 bis 200 kN, während einer Verweildauer von 2 bis 50 min, vorzugsweise von 10 bis 2o min behandelt wird.

7. Verfahren nach einem der vorhergehenden Ansprüche, **dadurch gekennzeichnet, dass** die Lederabfälle gebrauchte Lederteile enthalten oder aus solchen bestehen.

8. Verfahren nach einem der vorhergehenden Ansprüche, **dadurch gekennzeichnet, dass** zusammen mit dem Ledermahlgut Zusatzstoffe in die Mischung eingebracht werden.

9. Verfahren nach Anspruch 8, **dadurch gekennzeichnet, dass** dem Ledermahlgut 0 bis_10 Gew.-% in wässriger Lösung, Emulsion, Dispersion oder Suspension befindliche Polymere zur Regulierung der physikalischen Eigenschaften beigemengt werden.

10. Verfahren nach Anspruch 8, **dadurch gekennzeichnet, dass** die Zusatzstoffe Farbpigmente enthalten.

11. Verfahren nach einem der vorhergehenden Ansprüche, **dadurch gekennzeichnet, dass** eine mehrfarbige Mischung verwendet wird, die ggfs. in dem Werkstoff fixiert wird.

12. Verfahren nach einem der vorhergehenden Ansprüche, **dadurch gekennzeichnet, dass** in dem Werkstoff andere Materialien, insbesondere Verstärkungs- und Dekormaterialien enthalten sind und oder dieser auf solchen angeordnet ist.

13. Verfahren nach Anspruch 8, **dadurch gekennzeichnet, dass** als Zusatzstoff ein Hydrophobierungsmittel eingebracht wird.

14. Formteil erzeugt aus einem Werkstoff, der nach einem Verfahren nach einem der vorhergehenden Ansprüche hergestellt ist.

15. Formteil nach Anspruch 14, **dadurch gekennzeichnet, dass** es spanabhebend bearbeitet ist.

16. Formteil nach einem der Ansprüche 14 oder 15, **dadurch gekennzeichnet, dass** es ein Innenausstattungsteil einer Kraftfahrzeugkarosserie ist.

17. Formteil nach einem der Ansprüche 14 bis 16, **dadurch gekennzeichnet, dass** es als platten-, stangen- oder rohrförmiges Halbzeug ausgebildet ist.

18. Formteil nach einem der Ansprüche 14 bis 17, **dadurch gekennzeichnet, dass** es als dreidimensionaler Formkörper ausgebildet ist.
